# NEW EUROPEAN PATENT SPECIFICATION

(11) **EP 2 188 318 B2**
(45) Date of publication and mention of the opposition decision: **16.12.2015**
(45) Mention of the grant of the patent: 24.10.2012
(21) Application number: 08799209.5
(22) Date of filing: 05.09.2008
(51) Int. Cl.: C08G 18/08, C08G 18/32, C08G 18/62, C08G 18/79, C09D 175/04

(54) **WATER-BASED TWO-COMPONENT COATING COMPOSITION**
AUF WASSER BASIERENDE ZWEIKOMPONENTEN-BESCHICHTUNGSZUSAMMENSETZUNG
COMPOSITION DE REVÊTEMENT À DEUX COMPOSANTS À BASE D'EAU

(30) Priority: 13.09.2007 US 993621 P
(43) Date of publication of application: 26.05.2010
(73) Proprietor: Coatings Foreign IP Co. LLC, Wilmington, DE 19801 (US)
(72) Inventor: SCHAEFFER, Hermann, D-42275 Wuppertal (DE)
(74) Representative: Maiwald Patentanwalts GmbH
(86) International application number: PCT/US2008/075358
(87) International publication number: WO 2009/035915

(56) References cited:
- WO-A1-2006/064035
- DE-A1- 3 739 332
- US-A- 4 788 083
- US-A- 5 820 925
- US-A- 5 948 833
- US-A1- 2006 036 007
- US-A1- 2006 252 856
- US-B1- 6 180 714

## Description

The invention relates to pigmented water-based isocyanate-curing compositions which can be used as coating compositions in vehicle and industrial painting.

The use of water-based two-component coating compositions based on a pigmented base paint component and hardener component, for example as coating paints in vehicle and industrial painting, is widespread. The base paint component usually contains in this case water, pigments, binders and optionally organic solvents and additives.

In order to achieve a desired colour using a pigmented paint, a plurality of different pigments normally have to be used. In the case of what are known as FacPac or ready-mix products (paints which are prepared from scratch), the pigments are already contained in the correct ratio in the base paint component, whereas in mixed paint formulations the base paint component is composed from homologous components each containing just one pigment in accordance with a predetermined mixing formula to form the desired colour. Each homologous component has an individual composition which would allow it also to be used individually as a base paint. Homologous components each comprising one pigment are also referred to as mixed paints.

In isocyanate-curing coating compositions use is made, in the base paint component, of binders with functional groups which are able to react with isocyanates. These functional groups contain active hydrogen. The groups are in most cases alcoholic OH groups which are intended to react with the polyisocyanate crosslinking agent. Binders of this type are therefore also referred to as polyols.

The polyisocyanate or hardener component generalty consists of a multifunctional isocyanate or of a mixture of multifunctional isocyanates and, if required, also of one or more organic solvents and optionally additives.

Polyisocyanates are known to react not only with polyol binders but also with water. The isocyanate/water reaction (blow reaction) produces amine and gaseous carbon dioxide. In aqueous paints, the isocyanate/water reaction is therefore an undesirable secondary reaction. Nevertheless, for other purposes, for example for the preparation of assembly foams, it is desirable to a certain extent. There are therefore known methods allowing the ratio between the isocyanate/polyol reaction and the isocyanate/water reaction to be controlled.

It is thus, for example, common practice to catalyse the isocyanate/polyol reaction using tin compounds. In addition, it is also known to use, for example, zirconium complexes or manganese (III) acetylacetonate maleinates to catalyse this reaction

Furthermore, it is known, for example, from US 6512033 to accelerate, in water-dilutable isocyanate formulations, for example in sealing compounds, the isocyanate/Water reaction using specific tin catalysts. US-A-2006/0252856 and US-B-6180 714 described solvent-based two-component polyurethane coatings comprising an organometallic catalyst in combination with a chelating agent.

In the above-mentioned water-based two-component coating compositions, the base paint component and hardener component are mixed immediately before processing This produces the actual ready-for-use paint itself. As soon as mixing commences, the isocyanate starts to react, first of all imperceptibly, with the constituents of the base paint component. If the reaction of the isocyanate component with the components of the base paint component has advanced too far, it is no longer possible properly to process the coating composition. Depending on the intended use of the coating composition, a specific minimum processing time is therefore required. For example, the processing time in vehicle refinishing should be at least one hour.

The use of water-based isocyanate-curing coating compositions revealed that the use of specific pigments, especially pigments based on yellow or red iron oxides, results in unacceptable shortening of the processing time. For example, if covering red iron oxide pigments from the Pigment Red 101 Colour Index Group are used, the viscosity drops as little as 20 minutes after mixing of the base paint component and isocyanate component, and immediately thereafter the isocyanate/water reaction may be seen to commence and finally produces from the paint, which is initially still ready for use, a solid foam within a short time

As Pigment Red 101 and similar iron oxide pigments are conventional and necessary pigments for almost all red, covering colours in vehicle and industrial paints and there is almost no colour alternative thereto, the above-described behaviour can cause a single pigment to jeopardize from the outset the introduction of an entire mixed paint formulation and the preparation of a large number of important colours.

The object of the present invention was therefore to provide water-based two-component isocyanate-curing compositions, especially for use as coating compositions, which, irrespective of the pigment content, have an acceptable processing time and can be processed for a sufficiently long period of time, especially if use is made of specific covering iron oxide pigments such as red iron oxide pigments from the Pigment Red 101 Colour Index Group. In vehicle refinishing, in particular, there is a need for appropriately pigmented mixed paint components and finished paints having a long processing time of, for example, at least one hour

It has surprisingly been found that the processing time of water-based two-component isocyanate-curing compositions, especially compositions pigmented with iron oxide pigments such as, for example, compositions or coating compositions pigmented with covering red iron oxide pigments from the Pigment Red 101 Colour Index Group, can be significantly improved by adding complexing agents to the compositions without thereby adversely affecting other qualitative features of the coating, such as gloss and hardness, or having to allow for extended hardening times.

The present invention therefore relates to water-based compositions according to claim 1

The water-based composition preferably contains from 0.001 to 1 % by weight, particularly preferably 0.01 to 0.5 % by weight, of the at least one complexing agent, based on the total amount of the water-based composition. According to the invention, the complexing agent can also be used in the form of the salt thereof.

Hereafter the invention is described in more detail.

The term (meth)acrylic as used here and hereinafter should be taken to mean methacrylic and/or acrylic.

Unless stated otherwise, all molecular weights (both number and weight average molecular weight) referred to herein are determined by GPC (gel permeation chromatographie) using polystyrene as the standard.

Water-based compositions, in particular water-based coating compositions are compositions, wherein water is used as solvent or thinner when preparing and/or applying the composition. Usually, water-based coating compositions contain 20 - 80 % by weight of water, based on the total amount of the coating composition and optionally, up to 20% by weight, preferably, below 15% by weight of organic solvents, based on the total amount of the coating composition.

The term "processing time of a paint" refers to the time within which the paint, after mixing of the components which are usually reactive with one another, can still be processed sufficiently effectively to allow an appropriate painting result to be achieved. The end of the processing time is indicated, on the one hand, by altered viscosity and gas generation (and this may prevent smooth processing) and, on the other hand, by inadequate properties of the finished paint film such as, for example, low hardness, tack or low gloss.

The water-based compositions according to the invention, in particular water-based coating compositions, comprise components A), B) and C).

Component A) is a polyisocyanate component comprising at least one polyisocyanate compound with free isocyanate groups which act in the composition as a crosslinking agent.

Examples of the polyisocyanates are any number of organic polyisocyanates with aliphatically, cycloaliphatically, araliphatically and/or aromatically bound free isocyanate groups. The polyisocyanates are liquid at room temperature or become liquid through the addition of organic solvents. At 23°C, the polyisocyanates generally have a viscosity of 1 to 6,000 mPas, preferably, above 5 and below 3,000 mPas.

The preferred polyisocyanates are polyisocyanates or polyisocyanate mixtures with exclusively aliphatically and/or cycloaliphatically bound isocyanate groups with an average NCO functionality of 1.5 to 5. preferably 2 to 4.

Examples of particularly suitable polyisocyanates are what are known as "paint polyisocyanates" based on hexamethylene diisocyanate (HDI), 1-isocyanato-3,3,5-trimethyl-5-isocyanatomethyl-cyclohexane (IPDI) and/or bis(isocyanatocyclohexyl)-methane and the derivative known per se, containing biuret, allophanate, urethane and/or isocyanurate groups of these diisocyanates which, following production, are free from surplus parent diisocyanate, preferably by distillation, with only a residue content of less than 0.5% by weight. Triisocyanates, such as, triisocyanatononan can also be used.

Sterically hindered polyisocyanates are also suitable. Examples of these are 1,1,6,6-tetramethylhexamethylene diisocyanate, 1,5-dibutyl-pentamethyldiisocyanate, p- or m-tetramethylxylylene diisocyanate and the appropriate hydrated homologues

In principle, diisocyanates can be converted by the usual method to higher functional compounds, for example, by trimerization or by reaction with water or polyols, such as, for example, trimethylolpropane or glycerine The polyisocyanates can also be used in the form of isocyanate-modified resins.

The polyisocyanates can be used individually or mixed.

The polyisocyanate are those commonly used in the paint industry as crosslinking agents, and are described in detail in the literature and are also obtainable commercially.

The isocyanate groups of polysocyanate crosslinking agent B) may be partially blocked. Low molecular weight compounds containing active hydrogen for blocking NCO groups are known. Examples of these are aliphatic or cycloaliphatic alcohols, dialkylaminoalcohols, oximes, lactams, imides, hydroxyalkyl esters, esters of malonic or acetoacetic acid.

Although not preferred, the polyisocyanate crossliking agent B) can be used in combination with co-crosslinkers, e.g., in combination with melamine resins and/or completely blocked polyisocyanates

Component B) is a binder component comprising at least one water-dilutable binder with functional groups which are capable of entering into a crosslinking reaction with the isocyanate groups of the polyisocyanate compound.

The at least one water-dilutable binder contains functional groups containing active hydrogen. The water-dilutable binders are oligomeric and/or polymeric compounds with a number average molecular weight (Mn) of, e.g., 500 to 500,000 g/mole, preferably of 1100 to 300,000 g/mole. The functional groups with active hydrogen in particular comprise hydroxyl groups, primary and/or secondary amino groups. Binders with hydroxyl groups are preferably used as component B).

The binders with hydroxyl groups are for example the polyurethanes, (meth)acrylic copolymers, polyesters and polyethers, known from polyurethane chemistry to the skilled person, which are used in the formulation of aqueous compostions and coating compositions. They may each be used individually or in combination with one another.

In order to ensure sufficient water dilutability of the binders B), these binders are modified in a suitable manner to render them hydrophilic. The binders B) may be ionically (anionically and/or cationically) and/or non-ionically modified. An anionic and/or non ionic modification is preferred. An anionic modification may be obtained, for example, by incorporating carboxyl groups which are at least partially neutralized. A non ionic modification may be obtained, for example, by incorporating polyethylene oxide units. Alternatively, or in addition thereto, it is possible to obtain water-dilutability via external emulsifiers. Preferably, the water-difutable binders A) do not contain sulfonic and/or phosphonic acid groups.

Examples of water-dilutable polyurethane resins are those, for example, with a number average molecular weight Mn of 500 to 500 000 g/mol, preferably, of 1100 to 300 000 g/mol, most preferably, of 5000 to 300 000 g/mol, an acid value of 10 to 100 mg KOH/g, preferably of 20 to 80 mg KOH/g, and a hydroxyl value of 40 to 400 mg KOH/g, preferably, of 80 to 250 mg KOH/g. Appropriate polyurethane resins which may be used are, for example, prepared by reacting compounds which are reactive with respect to isocyanate groups and polyisocyanates having at least 2 free isocyanate groups per molecule.

Polyols of high molecular weight can be used as compounds which are reactive with respect to isocyanate groups, preferably, polyester polyols, polyether polyols and/or polycarbonate polyols with a molecular weight of, for example, 500-6000 g/mol. Polyols of low molecular weight with a molecular weight of 60-400 g/mol can also be co-used. Aliphatic and/or cycloaliphatic diisocyanates can preferably be used as polyisocyanates. Examples of useful polyisocyanates are phenylene diisocyanate, xylylene diisocyanate, diphenylmethane diisocyanate, isophorone diisocyanate, dicyclohexylmethane diisocyanate, tetramethylene diisocyanate, hexamethylene diisocyanate. In order to obtain a sufficient water-dilutability, the polyurethane resins can be modified, for example, with anionic groups as described above. The anionic groups can be introduced by way of compounds having at least one group reactive with respect to isocyanate groups and at least one group capable of producing anions. Preferred compounds of this type are dihydroxycarboxylic acids, with particular preference for dimethylolpropionic acid.

The thus obtained polyurethane resins can still be subjected to chain extension to increase the molecular weight. For example, No-functional polyurethane prepolymers can be reacted with compounds, which are reactive with respect to isocyanate groups. Compounds, which are reactive with respect to isocyanate groups, are in particular compounds with hydroxyl and/or secondary and/or primary amino groups. OH-functional polyurethane prepolymers can be chain extended for example with polyisocyanates

The water-dilutable polyurethane resins include such resins which are in modified form, for examples, as silicon-modified or (meth)acrylated polyurethane resins. Examples of water-dilutable polyurethane resins which may be used are described in U.S. 5,492,961, U.S. 5,141,987, U.S. 5,556,912, DE-A-41 15 042, U.S. 5,635,559, U.S. 5,691,425, DE-A-42 28 510, U.S. 5,854,337 and U.S. 4,489,135. The polyurethanes can be prepared in the organic phase and converted afterwards into the aqueous phase, but can also be prepared directly in the aqueous phase to form polyurethane emulsions. Those polyurethane emulsions may be crosslinked internally and can be defined as microgels. Preferably, those internally crosslinked polyurethane emulsions are used in waterborne basecoats.

Examples of water-dilutable poly(meth)acrylate resins include all water-soluble or water-dispersible poly(meth)acrylate resins which are suited for aqueous coatings and known to a skilled person. For example, they can be those with a number average molecular mass Mn of 1000-20000 g/mol, preferably, of 1100-15000, an acid value of 10-100 mg KOH/g, preferably, of 15-50 and a hydroxyl value of 40-400 mg KOH/g, preferably, of 60-200 mg KOH/g. The water-dilutable poly(meth)acrylate resins can also have been prepared in the presence of different binders, e.g., in the presence of oligomeric or polymeric polyester and/or polyurethane resins.

The poly(meth)acrylate copolymer can be prepared by free-radical polymerization of polymerizable, olefinically unsaturated monomers, optionally, in presence of oligomeric or polymeric polyester and/or polyurethane resins. Free-radically polymerizable, olefinically unsaturated monomers, which may be used are monomers which, in addition to at least one olefinic double bond, also contain further functional groups and monomers which, apart from at least one olefinic double bond, contain no further functional groups. Further functional groups may be, for example, urea, hydroxy, carboxyl, sulfonic acid, silane, amine, amide, acetoacetate or epoxy groups. It would be clear that only those functional groups can be combined in the poly(meth)acrylate copolymer which do not tend to self-crosslink.

Olefinically unsaturated monomers with hydroxyl groups are used to introduce hydroxyl groups into the (meth)acrylic copolymers. Suitable hydroxy-functional unsaturated monomers are, for example, hydroxyalkyl esters of alpha, beta-olefinically unsaturated monocarboxylic acids with primary or secondary hydroxyl groups. These may, for example, comprise the hydroxyalkyl esters of acrylic acid, methacrylic acid, crotonic acid and/or isocrotonic acid. The hydroxyalkyl esters of (meth)acrylic acid are preferred. The hydroxyalkyl residues may contain, for example, 2-10 C atoms, preferably, 2-6 C atoms. Examples of suitable hydroxyalkyl esters of alpha, beta-olefinically unsaturated monocarboxylic acids with primary hydroxyl groups are hydroxyethyl (meth)acrylate, hydroxypropyl (meth)acrylate, hydroxybutyl (meth)acrylate, hydroxyamyl (meth)acrylate, hydroxyhexyl (meth)acrylate. Examples of suitable hydroxyalkyl esters with secondary hydroxyl groups are 2-hydroxypropyl (meth)acrylate, 2-hydroxybutyl (meth)acrylate and 3-hydroxybutyl (meth)acrylate. Further olefinically unsaturated monomers with hydroxyl groups may, of course, also be used.

Carboxyl functional olefinically unsaturated monomers are used to introduce carboxyl groups into the (meth)acrylic copolymers. Examples of suitable olefinically unsaturated carboxylic acids include acrylic acid, methacrylic acid, crotonic acid and isocrotonic acid, itaconic acid, maleic acid, fumaric acid and the halfesters of the difunctional acids. Acrylic and methacrylic acid are preferred.

Examples of other additional suitable unsaturated monomers, which contain apart from an olefinic double bond further functional groups are ethyleneurea ethyl (meth)acrylate, dimethylaminoethyl (meth)acrylate, acetoacetoxyethyl (meth)acrylate, (meth)acrylamide, alkoxy methyl (meth)acrylamides, vinyl silane, methacryloxyethyl trialkoxysilanes, acrylamido 2 - methyl propane, vinyl imidazole.

Further monomers to be used are for example monomers which, apart from at least one olefinic double bond, contain no further functional, e.g. vinylaromatic monomers and aliphatic esters of olefinically unsaturated carboxylic.

Reactive thinners can be used in addition to the water-dilutable binders with functional groups containing active hydrogen.

The binders with functional groups containing active hydrogen B) and the polyisocyanate cross-linking agents A) are used in such proportion that the equivalent ratio of functional groups containing active hydrogen, preferably, hydroxyl groups, of binders B) to the isocyanate groups of cross-linking component A) can be 5:1 to 1:5, for example, preferably, 3:1 to 1.3, and in particular, preferably, 1.5:1 to 1:1.5. If reactive thinners are used, their reactive functions should be taken into account when calculating the equivalent ratio.

The coating compositions of the present invention contain at least one pigment C). All colour and/or special effect-giving pigments of organic or inorganic type used in paints are suitable for pigments C). Examples of inorganic or organic colour pigments are titanium dioxide, micronized titanium dioxide, iron oxide pigments, carbon black, azo pigments, phthalocyanine pigments, quinacridone or pyrrolopyrrole pigments. Examples of special effect pigments are metal pigments, for example, from aluminum or copper, interference pigments, such as, for example, aluminum coated with titanium dioxide, coated mica and graphite effect pigments.

In particular the compositions according to the present invention contain as pigment at least one oxide oder sulfide of at least one transition metal or of at least one lanthanoid, or at least one titanate or vanadate of Cr³⁺, Ni²⁺ or Bi³⁺. Particularly red or yellow iron oxide pigments are used. These can be for example iron oxide pigments of Color Index group Pigment Red 101.

Examples of iron oxide pigments are Bayferrox 110M, Bayferrox 140M, Bayferrox 130M, Bayferrox 130BM, Bayferrox 160M, Bayferrox Colortherm Red 520 and Ferroxide Rosso 224M.
These pigments can be used alone or in combination with each other and/or with other inorganic and/or organic colour pigments and/or with special effect pigments.

Component D) is at least one complexing agent wherein the at least one complexing agent is a chelating agent. A complexing agent is a compound capable of forming a complex, i.e. in particular capable of entering into coordinate bonds with a metal or metal ion, thus producing a complex. The at least one complexing agent can be a polymeric compound having a molecular weight distribution or a low molecular weight compound defined by structural and sum formula. Low molecular weight compounds defined by structural and sum formula are preferred.

Chelating agents are used as component D). A chelating agent is specific type of complexing agent capable of forming a chelate. A person skilled in the art understands by a chelate a cyclic compound wherein metals, groups with non-bonding electrons and hydrogen are participated in cycle formation The chelating agent (an ion or molecule) is accordingly a compound with at least two pairs of non-bonding electrons (electron donors) that is able to enter into coordinate bonds with a metal or metal ion, thus producing the chelate. The chelating agent or chelating ligand can react with more than one reactive center of a central atom, in particular of a metal atom or ion.

In principle, the chelating agents can also be used in salt form. This can facilitate the incorporation of the chelating agents into the coating compositions.

Chelating agents or their salts which may readily be used include, for example, ethylenediamine tetraacetic acid, ethylenediamine tetraacetate (tetraammonium ethylenediamine tetraacetate), diethylenetriamine pentaacetic acid, diethylenetriamine pentaacetate, N-(2-hydroxyethyl)triamine triacetate, 1,2-diaminoethanetetra(methylene phosphonate) and, diethylenetriaminepenta(methylene phosphonate).

Chelating agents which are used have as their structural element two tertiary amino groups separated by at least one ethylene group. Particularly preferred chelating agents or their salts include, for example, ethylenediamine tetraacetic acid, ethylenediamine tetraacetate, diethylenetriamine pentaacetic acid and diethylenetriamine pentacetate.

The chelating agent D) used is particularly preferably ethylenediamine tetraacetic acid or the salt thereof, e.g tetraammonium ethylenediamine tetraacetate According to the invention chelating agents which have as their structural element two tertiary amino groups separated by at least one ethylene group, in particular ethylene diamine tetraacetic acid (EDTA) or the salt thereof displays outstanding properties with regard to the extension of the processing time of the two-component coating compositions.

Chelating agents are available commercially, e.g as Versene^{®} EDTA, Versene^{®} DTPA and Versene^{®} HEDTA (Dow).

As stated hereinbefore, the chelating agents are preferably used in amounts of from 0.001 to 10 % by weight, particularly preferably 0.01 to 0.5 % by weight, based on the total water-based composition.

In case of solid chelating agents such as EDTA, the agents are preferably incorporated into the coating compositions as an aqueous solution. Therefore the chelating agent are used, as stated hereinbefore, in salt form This is to make it easier to incorporate the agents in acceptable times into the final coating compositions. Basic compounds to be used for salt formation of acid functional chelating agents are e g. basic neutralising agents usually used in paint industries for neutralisation of acid functional binders. Examples of basic neutralising agents are sodium hydroxide, potassium hydroxide, magnesium hydroxide as well as ammonia and tertiary amines, such as dimethyl ethanolamine, diethylethanolamine, trimethylamine, triethylamine, dimethylethylamine, dimethylbutylamine, N-methylmorpholine,

The aqueous composition containing the chelating agent in salt form may be introduced as a separate additive in the formulation of the final water-based compositions, in particular the final water-based coating compositions. For example, the chelating agents may be incorporated as aqueous solutions, containing 1 to 15 % by weight of the solid chelating agent. This corresponds to amounts of about 0.03 to 0.5 Mol chelating agent per kg aqueous solution. The amount of basic neutralising agent, e.g. the tertiary amine can be chosen such that e.g. at least 50% of the acid groups of the chelating agent are neutralized.

The aqueous compositions, in particular the aqueous coating compositions, according to the invention contain furthermore water, for example, 20-80 % by weight, in particular, 30-60% by weight, and possibly small amounts of organic solvents, e.g., up to 20% by weight, preferably, below 15% by weight based on the entire coating composition. The organic solvents are solvents conventionally used in coating techniques. These may originate from the preparation of the binders or are added separately Examples of suitable solvents are monohydric or polyhydric alcohols, e g., propanol, butanol, hexanol; glycol ethers or esters, for example, diethylene glycol dialkyl ether, dipropylene glycol dialkyl ether, each with C₁- to C₆-alkyl, ethoxypropanol, butyl glycol; glycols, for example, ethylene glycol, propylene glycol, N-melhyl pyrrolidone and ketones, e.g., ethyl ethyl ketone, acetone, cyclohexanone: aromatic or aliphatic hydrocarbons, for example, toluene, xylene, or straight-chain or branched aliphatic C₆-C₁₂-hydrocarbons. If organic solvents are present, water-miscible organic solvents are preferred.

The composition, in particular the coating compositions, according to the invention, can contain fillers and/or usual coating additives Examples of fillers are silicon dioxide, barium sulphate, talcum, aluminium silicate and magnesium silicate,

The additives are additives usually used in the paint industry Examples of such additives are light stabilizers, for example, based on benztriazoles and HALS (hindered amine light stabilizer) compounds, flow control agents based on (meth)acrylic homopolymers or silicon oils, rheology-influencing agents, such as, highly disperse silicic acid or polymeric urea compounds, thickeners, such as, cross-linked polycarboxylic acid or polyurethanes, anti-foaming agents, wetting agents, curing accelerators for the cross-linking reaction, for example, organic metallic salts, such as, dibutyl tin dilaurate, zinc naphthenate and compounds containing tertiary amino groups, such as, triethylamine for the cross-linking reaction of hydroxy functional binders with polyisocyanates. The additives are added in the usual amounts familiar to the person skilled in the art.

The water-based compositions of the present invention may advantageously be used as coating compositions in vesicle and industrial painting, for example as pnmers, fillers, base coat or pigmented top coat coating compositions. They may be used especially effectively as base coat or pigmented top coat coating compositions. They may be used directly as coating compositions or in combination with other pigmented or unpigmented components of a mixed paint system. The coating compositions are applied and harden in a conventional manner known to a person skilled in the art.

The aqueous coating compositions may be used for the production of a color- and/or special effect-imparting single-stage top coating layer within a one- or multilayer coating or for the production of the color- and/or special effect-imparting coating layer within a base coat/clear coat two-layer coating. The water-borne base coating compositions or single-stage top coating compositions may be applied by conventional methods. They are preferably applied by spraying to a dry film thickness of, for example, 8 to 40 µm. In case of basecoat/clear coat two-layer coating application preferably proceeds by the wet-on-wet process, i e after a flash-off phase, for example, at 20 to 80°C, the water-based base coat layers are overcoated with a clear coat to a dry film thickness of preferably 30 to 60 µm and dried or crosslinked together with the latter. Generally cunng temperatures of, for example, 20 to 150°C can be used. Curing conditions are determined by the industrial use of the coating compositions of the present invention

The coating compositions of the present invention may be applied onto various types of substrate. The substrates are generally of metal or of plastics. These are often precoated, i.e plastics substrates may, for example, be provided with a plastics primer, metallic substrates may have a primer layer or an electrophoretically applied primer and optionally additionally one or more further coating layers, such as, for example, a primer surfacer layer (filler layer) These layers are in general cured

The water-based coating compositions according to the invention are suitable for automotive and industrial coating. In the automotive coating sector the coating compositions may be used both for OEM (Original Equipment Manufacture) automotive coating and for automotive and automotive part refinishing (refinishing of vehicle bodies and parts thereof) Sloving or baking temperatures from 80°C to 140°C, for example, preferably from 110°C to 130°C, are used for original automotive coating Curing temperatures from 20°C to 80°C. for example, particularly from 40°C to 60°C are used for automotive refinishing. The coating compositions can also be used in coating large vehicles, such as, trucks, busses and railroad cars. In the latter case curing temperatures from 20°C to 100°C are preferably used.

The water-based two-component isocyanate-crosslinking compositions, in particular coating compositions, of the present invention are distinguished by a long processing time of at least 60 minutes. In particular, it is possible to prepare aqueous two-component mixed paints and ready-for-use paints (FacPacs) containing covering red or yellow iron oxide pigments, especially from the Pigment Red 101 Colour Index Group having an adequate processing time. Processing times of up to 90 minutes may, for example, be achieved It has surprisingly also been found that the addition of the chelating agents to the water-based two-component coating compositions does not adversely affect the mechanical and visual properties of the coatings obtained The reactivity of the OH/NCO crosslinking system is not impaired. The requisite mechanical and visual properties of the coatings, such as for example gloss, rapid freedom from tack, and hardness, may be achieved within conventional hardening times of, for example, 30 - 40 minutes at 60 - 80 °C.

The invention will be further described by reference to the following Examples. All parts and percentages are on a weight basis unless otherwise indicated. All molecular weights disclosed herein are determined by GPC (gel permeation chromatography) using a polystyrene standard.

### Examples

### Example. 1

### Preparation of iron oxide red mixed paint components with a chelating agent

First of all, the following components were dispersed with one another in a bead mill (base component):
4.2 % by weight of demineralised water
20 % by weight of a conventional commercial water-dilutable OH-functional binder (Bayhydrol A145, 44 % in water, Bayer)
14 % by weight of Pigment Red 101 (Bayferrox^{®} 130 BM)
1.9% by weight of ByK 331 (flow control additive from Byk)
0.5 % by weight of Surfynol 104 (50 % dissolved in butyl glycol, defoaming agent from Air Products)
0.5 % by weight of DMEA (N,N-dimethylethanolamine)

After dispersion, 40 % by weight of Bayhydrol A145 and 1.9 % by weight of demineralised water were added.

Three paints were prepared with the above components (resulting in Examples 1.1, 1.2 and 1.3.

There was then incorporated into each paint 1.0 % by weight of an aqueous solution of the chelating agent ethylenediamine tetraacetric acid (EDTA) in salt form each having a differing content of solid chelating agent. The aqueous solutions were prepared from the following components (the percentages by weight relate to the total aqueous solution):

| Example | % by weight of EDTA, solid | Mol EDTA per kg* | % by weight of Amine | Mol Amine per kg* | Demineralised water |
|---|---|---|---|---|---|
| 1.1 | 2.5 | 0.0813 | 5.0 | 0.2665 | 92.5 |
| 1.2 | 6.0 | 0.1950 | 12.0 | 0.6395 | 82.0 |
| 1.3 | 12.0 | 0.3901 | 24.0 | 1.2790 | 64.0 |

| | | | | | |
|---|---|---|---|---|---|
| * per kg aqueous solution Amine: AMP-95 (Amino methyl propanol) 16 % by weight of Desmodur N3600 (100 %, HDI trimer. Bayer) were used as the polyisocyanate crosslinking agent (hardener component). | | | | | |

Unless otherwise specified, the percentages by weight indicated for the individual components in Examples 1.1, 1.2 and 1.3 each relate to the total amount of the coating composition (including hardener component).

### Example 2 (comparative example)

### Preparation of an iron oxide red mixed paint component without chelating agent

The procedure was as in Example 1 apart from the fact that no chelating agent (EDTA) was added. The 1 % by weight of aqueous solution of the chelating agent from Example 1 was compensated for by adding Bayhydrol A145 and 2.9 °/° by weight of demineralised water after dispersion.

The polyisocyanate crosslinking agents used were, again, 16 % by weight of Desmodur N3600 (100 %, HDI trimer; Bayer).

After mixing of the respective base and hardener component, the results set out in the following table were achieved for Examples 1.1 to 1.3 according to the invention and the comparative example:

| Example | % by weight of EDTA. solid* | Processing time/min | CO₂ formation after/min |
|---|---|---|---|
| 1.1 | 0.025 | 90 | 270 |
| 1.2 | 0.06 | 90 | none |
| 1.3 | 0.12 | 90 | none |
| Comparison | 0 | 30 | 60 |

### *based on the total coating composition

The results presented clearly reveal that the examples according to the invention using the chelating agent have a much longer processing time than the comparative example. A processing time of just 30 minutes, as is achieved in the comparative example, is unacceptable under practical conditions, for example during painting in a car refinishing body shop. After these 30 minutes, the viscosity in the flow cup was no longer measurable. In Example 1.1 CO₂ formed only after 4.5 hours, whereas in Examples 1.2 and 1.3 there was no CO₂ formation at all. In the comparative example, the material volume had doubled after just 1 hour.

### Application of coating compositions

The coating compositions of examples 1.1 to 1.3 have been applied 60 minutes after mixing the respective base and hardener component, the comparative coating composition has been applied directly after mixing the respective base and hardener component as topcoats and have been sprayed in a dry-film thickness of about 52 µm on a steel panel (precoated with an electrodeposition coating and a commercial primer surfacer) and cured for 30 minutes at 80°C.

The resulting coatings showed excellent appearance and hardness.

The results for appearance (gloss and haze) are shown below:

| Example | Haze | Gloss (20°) |
|---|---|---|
| 1.1 | 8 | 87 |
| 1.2 | 9 | 87 |
| 1.3 | 8 | 87 |
| Comparison | 9 | 87 |

The results clearly reveal that the examples according to the invention using the chelating agent have excellent haze and gloss values. Haze and gloss values are comparable with haze and gloss values of the comparative example and have not been deteriorated due to the addition of the chelating agent.

### Test methods:

Gloss and Haze values have been measured by Micro-Haze plus (Byk-Gardner) according to DIN 67530 (Gloss) and DIN EN ISO 13803 (Haze).

## Claims

1. Water-based composition comprising
A) a polyisocyanate component comprising at least one polyisocyanate compound with free isocyanate groups,
B) a binder component comprising at least one water-dilutable binder with functional groups which are capable of entering into a crosslinking reaction with the isocyanate groups of the isocyanate compound,
C) at least one pigment and
D) at least one complexing agent wherein the at least one complexing agent D) is a chelating agent having as a structural element two tertiary amino groups separated by at least one ethylene group.

2. Water-based composition according to claim 1, comprising from 0.001 to 1.0 % by weight of the at least one complexing agent, based on the total water-based composition.

3. Water-based composition according to claim 2, comprising from 0.01 to 0.5 % by weight of the at least one complexing agent, based on the total water-based composition.

4. Water-based composition according to any one of claims 1 to 3, wherein the at least one complexing agent is used in salt form.

5. Water-based composition according to any one of claims 1 to 4, wherein the at least one complexing agent is ethylenediamine tetraacetic acid, ethylenediamine tetraacetate, diethylenetriamine pentaacetic acid and/or diethylenetriamine pentaacetate.

6. Water-based composition according to any one of claims 1 to 5, wherein the at least one pigment C) comprises the oxide or sulphide of at least one transition metal or of at least one lanthanoid, the titanate or vanadate of Cr³⁺, Ni²⁺ or Bi³⁺, respectively alone or in combination.

7. Water-based composition according to any one of claims 1 to 6, wherein the at least one pigment C) comprises at least one iron oxide pigment.

8. Water-based composition according to any one of claims 1 to 7, wherein the at least one pigment C) comprises at least one red iron oxide pigment from the Pigment Red 101 Colour index Group.

9. Water-based composition according to claim 8 , wherein the at least one red iron oxide pigment is Bayferrox 110M, Bayferrox 140M, Bayferrox 130M, Bayferrox 130BM, Bayferrox 160M, Bayferrox Colortherm Red 520 and/or Ferroxide Rosso 224M.

10. Use of the water-based composition of any one of claims 1 to 9 as a coating composition in vehicle and industrial painting.

11. Use of the water-based composition of any one of claims 1 to 9 as a base coat coating composition or pigmented top coat coating composition in vehicle painting.

## Patentansprüche

1. Auf Wasser basierende Zusammensetzung umfassend:
A) eine Polyisocyanatkomponente, die mindestens eine Polyisocyanatverbindung mit freien Isocyanatgruppen umfasst,
B) eine Bindemittelkomponente, die mindestens ein wasserverdünnbares Bindemittel mit funktionellen Gruppen umfasst, die in der Lage sind, eine Vernetzungsreaktion mit den Isocyanatgruppen der Isocyanatverbindung einzugehen,
C) mindestens ein Pigment und
D) mindestens einen Komplexbildner wobei der mindestens eine Komplexbildner D) ein Chelatbildner ist, aufweisend als strukturelles Element zwei tertiäre Aminogruppen, die durch mindestens eine Ethylengruppe getrennt sind.

2. Auf Wasser basierende Zusammensetzung nach Anspruch 1, die 0,001 bis 1,0 Gew.-% des mindestens einen Komplexbildners, auf die gesamte, auf Wasser basierende Zusammensetzung bezogen, umfasst.

3. Auf Wasser basierende Zusammensetzung nach Anspruch 2, die 0,01 bis 0,5 Gew.-% des mindestens einen Komplexbildners, auf die gesamte, auf Wasser basierende Zusammensetzung bezogen, umfasst.

4. Auf Wasser basierende Zusammensetzung nach einem der Ansprüche 1 bis 3, wobei der mindestens eine Komplexbildner in Salzform verwendet wird.

5. Auf Wasser basierende Zusammensetzung nach einem der Ansprüche 1 bis 4, wobei der mindestens eine Komplexbildner Ethylendiamintetraessigsäure, Ethylendiamintetraacetat, Diethylentriaminpentaessigsäure und/oder Diethylentriaminpentaacetat ist.

6. Auf Wasser basierende Zusammensetzung nach einem der Ansprüche 1 bis 5, wobei das mindestens eine Pigment C) das Oxid oder Sulfid von mindestens einem Übergangsmetall oder von mindestens einem Lanthanoid umfasst, wobei das Titanat oder Vanadat von Cr³⁺, Ni²⁺ oder Bi³⁺ jeweils also solches oder in Kombination vorliegt.

7. Auf Wasser basierende Zusammen nach einem der Ansprüche 1 bis 6, wobei das mindestens eine Pigment C) mindestens ein Eisenoxidpigment umfasst.

8. Auf Wasser basierende Zusammensetzung nach einem der Ansprüche 1 bis 7, wobei das mindestens eine Pigment C) mindestens ein rotes Eisenoxidpigment aus der Pigment Rot 101-Farbindexgruppe umfasst.

9. Auf Wasser basierende Zusammensetzung nach Anspruch 8, wobei das mindestens eine rote Eisenoxidpigment Bayferrox 110M, Bayferrox 140M, Bayferrox 130M, Bayferrox 130BM, Bayferrox 160M, Bayferrox Colortherm Rot 520 und/oder Ferroxide Rosso 224M ist.

10. Verwendung der auf Wasser basierenden Zusammensetzung nach einem der Ansprüche 1 bis 9 als Beschichtungszusammensetzung bei der Fahrzeug- und Industrielackierung.

11. Verwendung der auf Wasser basierenden Zusammensetzung nach einem der Ansprüche 1 bis 9 als Grundlackbeschichtungszusammensetzung oder pigmentierte Decklackbeschichtungszusammensetzung bei der Fahrzeuglackierung.

## Revendications

1. Composition aqueuse comprenant
A) un composant polyisocyanate comprenant au moins un composé polyisocyanate avec des groupes isocyanate libres,
B) un composant liant comprenant au moins un liant pouvant être dilué dans l'eau avec des groupes fonctionnels qui sont capables d'entrer dans une réaction de réticulation avec les groupes isocyanate du composé isocyanate,
C) au moins un pigment et
D) au moins un agent de complexation dans laquelle le au moins un agent de complexation D) est un agent chélatant, l'agent chélatant a comme élément structurel deux groupes aminés tertiaires séparés d'au moins un groupe éthylène.

2. Composition aqueuse selon la revendication 1, comprenant de 0,001 à 1,0 % en poids du au moins un agent de complexation, sur la base de la composition aqueuse totale.

3. Composition aqueuse selon la revendication 2, comprenant de 0,01 à 0,5 % en poids d'au moins un agent de complexation basé sur la composition aqueuse totale.

4. Composition aqueuse selon l'une quelconque des revendications 1 à 3, dans laquelle le au moins un agent de complexation est utilisé sous une forme de sel.

5. Composition aqueuse selon l'une quelconque des revendications 1 à 4, dans laquelle le au moins un agent de complexation est l'acide éthylènediamine tétraacétique, le tétraacétate d'éthylènediamine, l'acide diéthylènetriamine pentaacétique et/ou le pentaacétate de diéthylènetriamine.

6. Composition aqueuse selon l'une quelconque des revendications 1 à 5, dans laquelle le au moins un pigment C) comprend l'oxyde ou le sulfure d'au moins un métal de transition ou d'au moins un lanthanoïde, le titanate ou le vanadate de Cr³⁺, Ni²⁺ ou Bi³⁺, respectivement seul ou en combinaison.

7. Composition aqueuse selon l'une quelconque des revendications 1 à 6, dans laquelle le au moins un pigment C) comprend au moins un pigment d'oxyde de fer.

8. Composition aqueuse selon l'une quelconque des revendications 1 à 7, dans laquelle le au moins un pigment C) comprend au moins un pigment type oxyde de fer rouge à partir du groupe Pigment rouge 101 de l'index des couleurs.

9. Composition aqueuse selon la revendication 8, dans laquelle le au moins un pigment d'oxyde de fer rouge est le Bayferrox 110M, le Bayferrox 140M, le Bayferrox 130M, le Bayferrox 130BM, le Bayferrox 160M, le Bayferrox Colortherm Red 520 et/ou le Ferroxide Rosso 224M.

10. Utilisation de la composition aqueuse selon l'une quelconque des revendications 1 à 9, comme composition de revêtement dans la peinture automobile et industrielle.

11. Utilisation de la composition aqueuse selon l'une quelconque des revendications 1 à 9, comme composition de revêtement de couche de base ou composition de revêtement de couche de finition pigmentée en peinture automobile.
